# EUROPEAN PATENT SPECIFICATION

(11) **EP 4 052 557 B1**
(45) Date of publication and mention of the grant of the patent: **25.03.2026**
(21) Application number: 22154334.1
(22) Date of filing: 31.01.2022
(51) Int. Cl.: A01D 17/00, A01D 61/04, B03B 11/00, B65G 17/06, B03B 5/40, B03B 5/28, B07B 1/10, B65G 19/10, B65G 19/24, B65G 49/04

(54) **A SEPARATING MACHINE**
TRENNMASCHINE
MACHINE DE SÉPARATION

(30) Priority: 02.03.2021 EP 21160198
(43) Date of publication of application: 07.09.2022
(73) Proprietor: Deprez Construct NV, 8610 Kortemark (BE)
(72) Inventor: Deprez, Johan, 8680 Koekelare (BE)
(74) Representative: Ipsilon Belgium

(56) References cited:
- DE-C1- 19 511 931
- GB-A- 2 354 503
- US-A- 2 698 087

## Description

### Field of the Invention

The present invention generally relates to the field of agricultural machinery and separation machinery, more particular to separation machinery for e.g. separating crops like root crops, and to endless belts used in such machines.

### Background of the Invention

When crops, like root crops (carrots, potatoes, beets, turnips, ...) are harvested, not only the crops and ground is picked up by the machinery used, but also foreign particles like plastic materials, bars of all kinds of material, branches, leaves, etc, are present in the product stream.

Various separating machinery are used to separate the foreign products from the crops. Separating machinery separating products by the difference in specific weight of the products or by the dimensions of the products are used. An example of an agricultural separating machine separating products by the difference in specific weight of the products is given in US4750995. In such machines, the liquid phase may get contaminated at the walls of the machine due to sedimentation of particles from the liquid. In separating machinery separating products by the dimensions of the products are used, functional surfaces of the machine, like the loading surface on which the products to be separated are provided to the machine, get contaminated with ground and mud sticking to the functional surface.

Hence such machines often get dirty and ground, mud and alike gets to contaminate the surfaces with which the products come in contact with.

US2698087A1 discloses a machine separating products by the difference in specific weight. Stones and mud sinks to the bottom of the vessel, where a belt scrapes the stones and mud, an brings it to the rim of the vessel. Potatoes and other floating products are removed via a second belt. The separating machine comprises hence a first extraction unit comprising an open endless belt with openings, and a liquid container for receiving and separating products on difference of specific weight. This container has a first flat surface extending between the bottom and a first rim of the container, the inner side of the open endless belt contacting this first flat surface along the first flat surface while moving from the bottom to the first rim.

Hence there remains a need for a machine that separates products by the difference in specific weight, where mud and smaller but heavy particles are separated from crops like potatoes, while simultaneously the lightweight objects, like plastics, are removed from the crops, like potatoes.

### Summary of the Invention

According to a first aspect of the present invention, a separating machine for separating products by the difference in specific weight of the products is provided. The separating machine comprises a first extraction unit comprising a first open endless belt.

The separating machine for separating products by the difference in specific weight of the products, comprises a liquid container for receiving and separating products on difference of specific weight. The container has a first flat surface extending between the bottom and a first rim of the container, the inner side of the first open endless belt contacts this first flat surface along at least part of the first flat surface while moving from said bottom to said first rim. The first extraction unit comprises a first discharge means at the inner side of the first open endless belt for discharging a first type of material carried along with said open endless belt, which first type of material passes the openings in said first open endless belt. The first extraction unit comprises a second discharge means at the outer side of the first open endless belt for discharging a second type of material carried along with said first open endless belt, which second type of material is larger than the openings in said first open endless belt.

The machine comprises a liquid container for receiving and separating products on difference of specific weight, the container having a first flat surface extending between the bottom and a first rim of the container. The inner side of the first open endless belt may contact this first flat surface along at least part of the first flat surface while moving from said bottom to said first rim.

The separating machine comprises a first extraction unit to remove all sunken objects from the bottom of the container. The first extraction unit comprises the first endless belt. This first endless belt may be provided with paddles or scoops, scooping up the sunken objects from the bottom, and move them to the surface of the liquid. There the extracted objects are further removed by means of e.g. a first transport means, like a transport belt, or are provided into a second container for removal.

This first endless belt is an open endless belt having openings. An open endless belt has the advantage that the liquid is not scooped up along with the sunken objects when the first open endless belt leaves the liquid. Hence less liquid is to be handled after the sunken objects are extracted from the container, since only little liquid is dragged along at the surfaces of the objects extracted.

This first endless belt may be provided in the container such the first open endless belts inner side contacts the surfaces of the container. As an example, the first endless belt follows a path along a first flat surface from the bottom of the container upwards to a first rim of the container, a path under or over the container from the first to the second rim of the container, from the second rim downwards to the bottom of the container further along a second flat surface of the container and along the bottom of the container.

The inner side of the first endless belt contacts at least the first flat surface of the container along at least part of the flat surface while moving from bottom to the first rim. The lower, inner side of the first open endless belt will contact the flat surface, this surface will be scraped while the first open endless belt moves from bottom to the first rim. I Possible dirt and sediment, which may occur in the liquid, is scraped from the surface- and dragged along with the first open endless belt. As such this flat surface is cleaned and sediment and dirt are moved upwards out of the liquid by this first open endless belt. Preferably the dragged dirt and sediment are provided in a first discharge means, e.g. a gutter or on a transport belt near or at the first rim of the container. The dragged dirt and sediment fall through or out of the openings in the first open endless belt. The first discharge means is preferably positioned before the first rim of the container in which the first open endless belt moves. This first discharge means is preferably positioned before the turning roll of the first open endless belt. Other sunken objects, being larger than the openings in the open endless belt, will at that moment still be on the outer surface of the first open endless belt, and can be provided to a second discharge means, e.g. a transport means, like transport belt, or into a second container for removal, which second discharge means is preferably positioned at the turning point of the first open endless belt. This second discharge means is provide at the outer side of the first open endless belt. Preferably the inner surface of the first open endless belt also contacts the second flat surface and/or the bottom of the container.

As an example, the first open endless belt comprises traversal bars which are flush with or extend beyond a first and a second longitudinal chain or belt, optionally being traction belts or drive belts, like rubber or other polymer belts. These first and second chains or belts may be at the transversal outer ends of the first open endless belt. Because the bars of this first open endless belt are flush with or extend beyond the first and second longitudinal chain or belt at the inner side of the first open endless belt, the bars contacting the flat surface and will scrape to the flat surface while moving from bottom to the first rim.

Preferably the first open endless belt used in a separating machine for separating products by the difference in specific weight of the products, has bars with at their lower side a ridge, a rib, a fin, or alike. Preferably the first open endless belt used in a separating machine for separating products by the difference in specific weight of the products, has bars with at their upper side a paddle or a fin. This paddle or fin is used to take the larger sunken objects along with the first open endless belt.

There is a discharge point from the first open endless belt at the first rim of the first flat surface. This discharge point is the turning point of the first open endless belt. The first open endless belt preferably turs further downwards after the discharge point. At this discharge point, the second discharge means may be provided.

The container of the separating machine is adapted to receive a separation liquid, which may be an aqueous liquid, such as water or a suspension of e.g. starch in water. Products to be separated into different streams of goods are provided, e.g. poured, into the liquid-filled container. Objects forming part of products to be separated will either sink to the bottom of the container or float on the liquid surface. This is dependent on the density of the liquid in the container and the specific weight of the objects.

The product to be separated may be foreign material from root-crops, optionally freshly harvested or alternatively already washed root-crops. The foreign material may be plastics, leaves, etc. Ground or dirt present on the skin of the root-crops may be transferred to the liquid, and as such sediment may form at bottom of container. The inner side of the first open endless belt may scrape the sediment from the bottom and surfaces of the container, temporarily locate the sediment in the openings of the endless open belt, and drag the sediment towards the first rim where it can be extracted from the container, e.g. using a gutter. The crops will be scooped and taken by the first open endless belt upwards beyond the first rim. The openings in the first open endless belt may be small enough to prevent the root-crops to pass the openings.

The container, preferably along the surface opposite to first flat surface via which the sunken objects are extracted, may comprise air or liquid blowers under the liquid level. This to circulate liquid and to assist floating products to be driven to the liquid surface or even to the side where the first extraction unit is present.

The container may have a funnel shape. Preferably the first flat surface is less steep as compared to the second flat surface.

In the separation machine, a first open endless belt is provided. This first open endless belt is of particularly advantageous use in agricultural machinery, such as agricultural separating machines and/or in the use in the recycling industry.

This first open endless belt may be a combination of at least two longitudinal belts or chains, between which traverse bars are provided. These at least two longitudinal belts or chains are also referred to as the outer chains or belts. This first open endless belt may be a sieve belt or alike. Optionally, additional longitudinal belts or chains, also referred to as intermediate chains or belts, may be provided at a transversal position between the two outer longitudinal belts or chains. The outer and/or intermediate belts may be drive or traction belts, such as polymeric, like rubber, drive or traction belts. The transversal bars may be linked to the two outer chains or belts, and to one, more or all intermediate chains or belts, by e.g. riveting. The distance between consecutive bars may be e.g. in the range 10 to 50 mm centre-to-centre. The bars may have a width, which is the diameter of the bars if they have a circular radial cross section, in the range of 10 to 50mm. The open gap or distance between consecutive bars may be e.g. in the range of 10 to 40mm. The distance between adjacent longitudinal belts or chains, may be in the range of 300 to 1000mm, such as in the range of 500 to 800mm.

According to some embodiments, the first open endless belt may have a longitudinal and transversal direction and defining an inner and an outer side to the first open endless belt. The first open endless belt comprises:
- a first and second longitudinal chain or belt at the transversal outer ends of the first open endless belt;
- a plurality of transversal bars having a first and a second outer end, the first outer end being connected to the first longitudinal chain or belt, the second outer end being connected to the second longitudinal chain or belt;
wherein the lower surfaces of the bars are flush with or extend beyond the first and second longitudinal chain or belt at the inner side of the first open endless belt.

The bars extending beyond the first and second longitudinal chain or belt at the inner side of the first open endless belt will cause the bars extending beyond the first and second longitudinal chain or belt in a direction from the outer to the inner side of the first open endless belt along the inner side of the first open endless belt.

The lower surfaces of the bars being flush with or extending beyond the first and second longitudinal chain or belt at the inner side of the first open endless belt have the advantage that in use, in particular in agricultural machinery, such as agricultural separating machines, these lower surfaces may contact surfaces of a machine in which the first open endless belt is used. When operating the first open endless belt, the lower surfaces of the bars may slide over moving or fixed surfaces and as such may scrape these surfaces, thereby removing material left on said surfaces. In particularly in agricultural machines, often dirt (like ground or mud and alike) builds up on functional surfaces of such machines. It may be important to reduce or even avoid such dirt build-up on these functional surfaces. Thereby interruptions of the machine in its entirety due to the accumulation of too much dirt on the functional surface are avoided.

According to some embodiments, the lower surfaces of the bars may extend beyond the first and second longitudinal chain or belt at the inner side of the first open endless belt.

As an example, the lower surfaces of the bars extend beyond the first and second longitudinal chain or belt at the inner side of the first open endless belt over a distance e.g. in a range of 0 to 30 mm.

The bars extending beyond the first and second longitudinal chain or belt at the inner side of the first open endless belt, increase the scraping effect of the first open endless belt in use.

According to some embodiments, longitudinal chains may be used, the chains may comprise chain link plates, each of said transversal bars being connected to one of the chain link plates.

According to some embodiments, longitudinal belts may be used, the belts may comprise flat upper surfaces, each of said transversal bars being connected to one or more of the flat upper surfaces of the belts. The belts, like drive belts or traction belts, may be provided from polymeric, like rubber, material and may have a serrated or toothed surface. The belts may be moved by one or more sprockets. The belts may be drive or traction belts, provided from e.g. polymeric, like rubber material, and optionally reinforced by fibers, ropes, filaments and alike. The belts may have a toothed surface on one or both sides of the belt. The bars may be connected to the belts in the zones between two adjacent teeth.

The bars may be provided from metal or metallic material, such as steel or stainless steel, or polymers, like polypropylene, polyethylene or polyester. The bars may have, in radial direction, a circular or polygonal cross section, such as triangular, square, rectangular or hexagonal. The width of the cross section of the bars, i.e. the largest length between two points of the circumference of the cross section of the bar, is in the range of 10 to 150mm.

Preferably one side of the polygonal cross section is parallel, even possibly coplanar, with the inner side of the first open endless belt.

The bars being connected to chain plates have the advantage that the orientation of the bars in view of the longitudinal chains remains always identical, independent the path, such as curves and alike, the chains may follow. Similarly, bars being connected to the - optionally flat - upper surfaces of the belts have the advantage that the orientation of the bars in view of the longitudinal belts remains always identical, independent the path, such as curves and alike, the belts may follow.

According to some embodiments, the bars may be rods provided at their lower side with a protrusion, said protrusion extending beyond the first and second longitudinal chain or belt at the inner side of the first open endless belt.

The lower side of the rod is the side oriented to the inner side of the first open endless belt.

The protrusion may be a ridge, a rib, a fin or alike, the outer part of it extending beyond the first and second longitudinal chain at the inner side of the first open endless belt. The protrusion may be made out of identical material as the rod but is preferably made from rubber or rubberlike material. Alternatively, the bars may, along part of the whole of their outer surface, be provided with a rubber coating. This may avoid damage to the products the bars contact during use. Optionally the lower side of the bars may be free of coating, or may be coated with another coating, e.g. wear resistant material.

The rods may be provided from metal or metallic material, such as steel or stainless steel, or polymers, like polypropylene, polyethylene or polyester. The rods may have, in radial direction, a circular or polygonal cross section, such as triangular, square, rectangular or hexagonal. Preferably one side of the polygonal cross section is parallel, even possibly coplanar, with inner side of the first open endless belt.

This protrusion may be the first protrusion if the bars are rods provided with a protrusion at their lower side, and with a further, second protrusion at their upper side.

This protrusion extends beyond the first and second longitudinal chain or belt at the inner side of the first open endless belt, i.e. in a direction from outer to inner side of the first open endless belt, over a distance of 0 to 30 mm.

The advantage of these protrusions is that the protrusions can function even better as a scraper when the inner side of the first open endless belt contacts a surface where unwanted material may accumulate.

According to some embodiments, the bars may be rods provided at their upper side with a protrusion, said protrusion extending beyond the first and second longitudinal chain or belt at the outer side of the first open endless belt.

This protrusion extends beyond the first and second longitudinal chain or belt in a direction from inner to outer side of the first open endless belt.

The upper side of the rod is the side oriented to the outer side of the first open endless belt.

The protrusion may be a ridge, a rib, a fin, the outer part of this extending beyond the first and second longitudinal chain or belt at the outer side of the first open endless belt. The protrusion may function as a paddle. The protrusion may be made from identical material as the rod but may be made from rubber or rubberlike material, steel, stainless steel or polymer.

This protrusion has as an advantage that products being provided on the outer side of the first open endless belt, can be taken along with the belt more easily. In liquid circumstances, the protrusion can be used as paddle to scoop up products from or within the liquid.

According to some embodiments, the open endless belt further may comprise at least one elongate flexible element positioned between the longitudinal chains and parallel to the longitudinal direction.

Preferably the at least one bar may be mechanically connected to the at least one elongate flexible element.

The elongate flexible element may be a wire, a strand, a cord, a rope, a filament or alike. The elongate flexible element may be made from polymeric or metal material, such as steel or stainless steel, or combinations thereof. The elongate flexible elements preferably are steel cables, steel cords or steel ropes.

Bars may be mechanically connected to the at least one elongate flexible element by means of clamps, such as cable clamps or alike.

The elongate flexible element will reduce to some extent possible shearing or deforming of the belt during use.

According to some embodiments, the first open endless belt comprises a plurality of elongate flexible element positioned between the longitudinal chains or belt and parallel to the longitudinal direction, each one of the one elongate flexible elements being mechanically connected to at least one of the bars. According to some embodiments, the first open endless belt comprises a plurality of elongate flexible element positioned between the longitudinal chains or belts and parallel to the longitudinal direction, each one of the one elongate flexible elements being mechanically connected to at least one of the bars, and each one of the one elongate flexible elements being mechanically unconnected to at least one other of the bars.

The elongate flexible elements may be coupled to every second or third bar. Every bar may be coupled to at least one elongate flexible element. The advantage of this coupling is the fact that the first open endless belt's mesh size will not vary significantly when the first open endless belt is loaded with products on its outer surface. Due to the fact that not necessarily all bars are mechanically connected to all elongate flexible elements, a bit of flexibility in the transversal direction is given to the elongate flexible elements. This increases the lifetime of the elongate flexible elements when the open endless belt is in use.

According to some embodiments, the distance between adjacent elongate flexible elements, centre to centre, may be in the range of 50 to 250 mm, such as in the range of 100 to 200mm.

Preferably the elongate flexible elements are parallel one to the other.

The distance between adjacent elongate flexible elements, centre to centre, defines the width of the mesh size of the first open endless belt in transversal direction.

According to some embodiments, the open endless belt further may comprise additional longitudinal belts or chains, also referred to as intermediate chains or belts, provided at a transversal position between the two outer longitudinal belts or chains. The outer and/or intermediate belts may be drive or traction belts, such as polymeric, like rubber, drive or traction belts. The transversal bars may be linked to the two outer chains or belts, and to one, more or all intermediate chains or belts, by e.g. riveting. The distance between adjacent longitudinal belts or chains, may be in the range of 300 to 1000mm, such as in the range of 500 to 800mm. Hence according to some embodiments, the open endless belt further may comprise one or more intermediate longitudinal belts or chains, provided at a transversal positions between the two outer belts or chains.

According to some embodiments, the open endless belt further may comprise one or more intermediate longitudinal belts or chains, provided at a transversal positions between the two outer belts or chains. Optionally the open endless belt may comprise a first and second longitudinal belt. Optionally, the open endless belt comprises one or more intermediate longitudinal belts. According to some embodiments, the belts may be drive or traction belts. According to some embodiments, the first and second longitudinal belt may be drive or traction belts. Possibly, the distance between adjacent belts may be in the range of 500 to 800mm.

According to some embodiments, the distance between adjacent bars, centre to centre, may be in the range of 10 to 300mm, such as in the range of 10 to 50mm or in the range of 100 to 300 mm, such as in the range of 100 to 200mm.

The distance between adjacent bars, centre to centre, defines the length of the mesh size of the first open endless belt in longitudinal direction.

Various types of chains may be used to drive the open endless belt. The chains may be single strand roller chains, or double strand, triple strand or higher number strand roller chains. The chains may be single or double pitch roller chains. Preferably the chains are made from metal such as steel or stainless steel. The chains may be driven by corresponding sprockets, adapted to drive the chains and hence the open endless belt.

The belts may be drive belts or traction belts, provided from e.g. polymeric, like rubber, material, and optionally reinforced by fibers, ropes, filaments and alike. The belts may have a toothed surface on one or both sides of the belt. The bars may be connected to the belts in the zones between two adjacent teeth.

The endless open belt itself may have a width in the range of 500 to 2500mm.

The lower surfaces of the bars being flush with or extending beyond the first and second longitudinal chain or belt at the inner side of the first open endless belt have the advantage that in use, these lower surfaces may contact surfaces of agricultural machine in which the first open endless belt is used, e.g. in sorting machines, in separation machines, and alike. Preferably the first open endless belt is used in agricultural machines where crops are handled to which still ground and dirt are present.

When operating the first open endless belt, the lower surfaces of the bars may slide over moving or fixed surfaces and as such may scrape these surfaces, thereby removing dirt or ground, or even mud, on said surfaces. In particularly in agricultural machines, often dirt (like ground or mud and alike) builds up on functional surfaces of such machines. It may be important to reduce or even avoid such dirt build-up on these functional surfaces. Thereby interruptions of the machine in its entirety due to the accumulation of too much dirt on the functional surface are avoided.

The separating machine may comprise a second extraction unit for removing or extracting floating objects from the liquid surface. The second endless belt may comprise protrusions at the outer side of the second endless belt. The second endless belt hence may be provided with paddles or scoops, scooping up the floating objects. This second endless belt may be an open endless belt or a closed endless belt. The second endless belt may be an open endless belt, allowing the water scooped along with the floating objects, to run back to the liquid in the container.

Alternatively, the second extraction unit may comprise an overflow where liquid together with the floating objects are flowing out of the container. The second extraction unit is preferably positioned at one side of the container. The extracted object, separated from the products to be separated, are further removed by means of e.g. a first transport means, like a transport belt, or are provided into a first container for removal.

The separating machine for separating products by the difference in specific weight of the products may be an agricultural separating machine for separating agricultural products from foreign products by the difference in specific weight of the products. The agricultural products may be root crops, like potatoes, carrots, onions, beets and/or turnips and alike. So according to a second aspect of the present invention, the separating machine according to the first aspect of the invention is used for separating foreign materials from harvested root crops, such as potatoes, carrots, onions, beets, turnips and alike.

The container of the separating machine is adapted to receive a separation liquid, which may be an aqueous liquid, such as water or a suspension of e.g. starch in water. Products to be separated into different streams of goods are provided, e.g. poured, into the liquid-filled container. Objects forming part of products to be separated will either sink to the bottom of the container or float on the liquid surface. This is dependent on the density of the liquid in the container and the specific weight of the objects.

### Brief Description of the Drawings

Fig. 1 illustrates schematically an open endless belt used in an agricultural separating machine according to the invention.
Fig. 2 illustrates schematically some details of this open endless belt of figure 1.
Fig. 3 illustrates schematically an agricultural separating machine according to the invention, separating products by the difference in specific weight.

### Detailed Description of Embodiment(s)

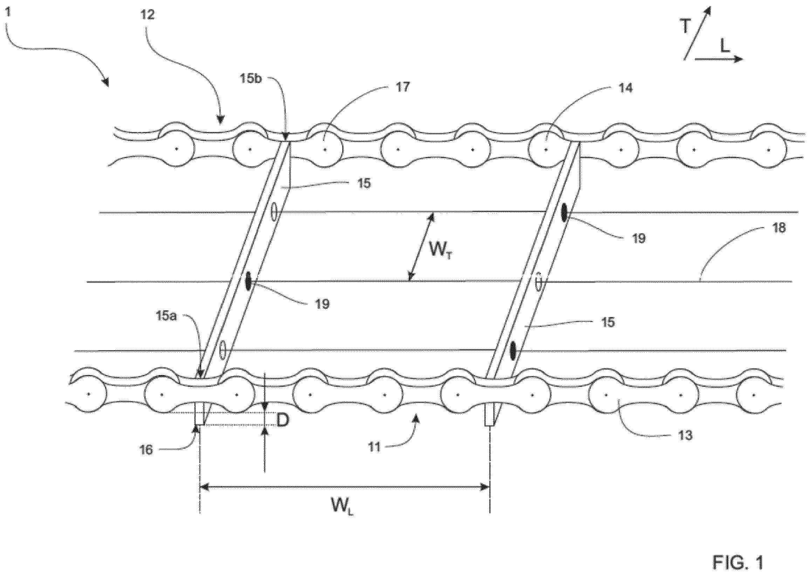

An open endless belt 1 is shown in figure 1. The open endless belt 1 has a longitudinal (L) and transversal (T) direction and defines an inner side 11 and an outer side 12 to the endless belt 1. The open endless belt 1 comprises a first and second longitudinal chain (13, 14) at the transversal outer ends of the belt 1. A plurality of transversal bars 15 are provided, each having a first and a second outer end (15a and 15b). The first outer end 15a is connected to the first longitudinal chain 13, the second outer end 15b being connected to the second longitudinal chain 14. The outer ends (15a, 15b) are connected to the chain link plates 17. This linkage may be done by any appropriate method such as gluing or welding. In the alternative strews or bolts and nuts may be used. The lower surfaces 16 of the bars 15 are flush with or extend beyond the first and second longitudinal chain (13, 14) at the inner side 11 of the open endless belt.

The chains 13 and 14 used are identical chains, being single strand double pitch roller chains.

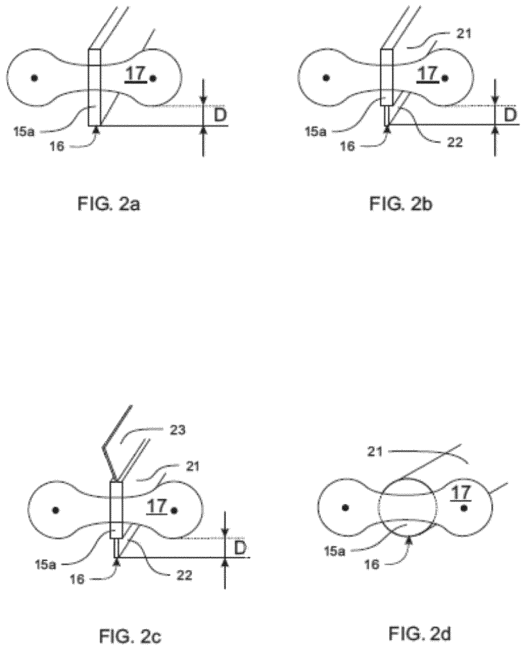

Some possible bars 15 linked to a chain link plate, are shown in figures 2a to 2c. In figure 2a, the bar 15 is a single bar or rod with a rectangular cross section. One of the sides of the rectangular cross section provides the lower surface 16 of the bar 15. In figure 2b, the bar 15 is a rod 21 with a rectangular cross section, at the lower side of the rod, a fin 22. The lower side sides of the fin 22 provides the lower surface 16 of the bar 15. In figure 2c, the bar 15 is a rod 21 with a rectangular cross section, at the lower side of the rod, a fin 22 and at the upper side a paddle 23. The lower side sides of the fin 22 provides the lower surface 16 of the bar 15. In figure 2d, a further alternative bar 15 is shown, being a single rod with a circular cross section, providing the lower surface 16 of the bar 15. The lower surface 16 of the bar 15 is flush with the chains 13 and 14, i.e. D=0.

The fin 22 may be provided from rubber. The paddle 23 may be provided from polymer, such as polypropylene.

The rods are made from steel, being rubber coated except at their lower surface 16. The length of the bar may be in the range 500 to 2500 mm.

The centre to centre distance WL between two adjacent bars 15 may be in the range of 100 to 300 mm.

As shown in figure 1, the distance D the lower side 16 of the bars 15 extend under the chains 13 and 14, may be in the range of 0 to 30mm.

In longitudinal direction, between the two chains 13 and 14, a plurality of elongate flexible elements, here ropes 18 are provided, which ropes are made from steel cords. The ropes may be coupled to the bars 15 by means of a coupling means 19 being e.g. cord clamps. The centre to centre distance WT between two adjacent ropes 18 may be in the range of 50 to ,250 mm.

Alternatively, the first open endless belt 1 is a combination of at least two outer longitudinal belts between which traverse bars are provided. This first open endless belt is a sieve belt. Optionally, additional longitudinal belts also referred to as intermediate r belts, may be provided at a transversal position between the two outer longitudinal belts. The outer and/or intermediate belts are traction belts, such as rubber traction belts. The transversal bars are linked to the two outer belts, and to all the intermediate belts, by e.g. riveting. The distance between consecutive bars may be e.g. in the range 10 to 50 mm centre-to-centre, e.g. 30mm. The bars may a circular radial cross section, is the diameter of the bars if they have a circular radial cross section, its diameter being e.g. about 30mm, providing an open gap or distance between consecutive bars of about 10mm. The distance between adjacent longitudinal belts is in the range of 500 to 800mm.

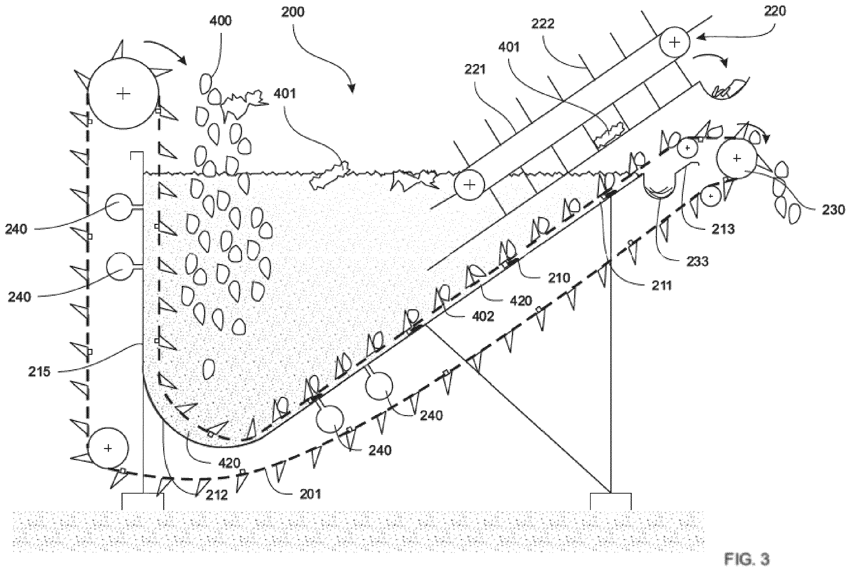

A separating machine 200, for separating products by the difference in specific weight of the products is shown in figure 3. The machine 200 comprises a first open endless belt 201, being the belt 1 as shown in figure1 or the alternative first open endless belt being a combination of at least two outer longitudinal belts between which traverse bars are provided.. The machine 200 comprises a liquid container 210 for receiving and separating products 400 on difference of specific weight. The container has a funnel shape and has a first flat surface 211 extending between the bottom 212 and a first rim 213 of the container 210. The inner side of the open endless belt 201 contacts this first flat surface 211 along its length while moving from the bottom 212 to said first rim 213. The container has also a second flat surface 215 which is steeper as compared to the first flat surface 211. In this embodiment, the second flat surface 215 is substantially vertically oriented.

The container is filled with a separation liquid, which may be water. Products 400 are provided, e.g. poured, into the liquid-filled container 210. Objects forming part of products to be separated will either sink to the bottom of the container or float on the liquid surface.

The separating machine comprises an extraction unit 220 to remove all floating objects 401 from the liquid surface. The extraction unit may comprise an endless belt 221 provided with paddles 222, scooping up the floating objects. This first endless belt may be an open endless belt or a closed endless belt. The first extraction unit 220 is positioned at one side of the container 210. The extracted objects or products 401, separated from the other sinking products, are further removed by means of e.g. a first transport means, like a transport belt.

The separating machine comprises another extraction unit 230 to remove all sunken objects from the bottom of the container. The open endless belt 201 is part of this extraction unit 230. The open endless belt 201 is an open endless belt 15 provided with paddles 23, as shown in figure 2c. This open endless belt 201 scoops up the sunken objects 402 from the bottom 212 and move them to the surface of the liquid. At the turning point 231 of the open endless belt 201, the sunken objects 402 are removed from the open endless belt and further removed by means of e.g. a second transport means, like a transport belt, or are provided into a second container for removal.

This open endless belt 201 contacts the first flat surface with the lower sides of the bars of the open endless belt. Because the bars of the open endless belt 201 are flush with or extend beyond the first and second longitudinal chain at the inner side of the open endless belt, the bars contacting the flat surface will scrape to the flat surface while moving from bottom 212 to the first rim 213. Possible dirt and sediment 420, which settles in the liquid, is scraped from the surface 211 and dragged along with the bars of the open endless belt 201. As such this flat surface is cleaned and sediment and dirt are moved upwards out of the liquid by this open endless belt 201. The dragged dirt and sediment, together with scooped products which are smaller than the openings in the open endless belt, are provided in a gutter 233. The sunken objects 402 being larger than the openings in the open endless belt are at that moment still on the outer surface of the open endless belt and can be provided to a transport means.

The product to be separated by the machine 200 may be foreign material from root-crops, optionally freshly harvested or alternatively already washed root-crops. The foreign material may be plastics, leaves, etc. Ground or dirt present on the skin of the root-crops may be transferred to the liquid, and as such sediment may form at bottom of container. The inner side of the open endless belt 201 scrapes the sediment from the bottom and surfaces of the container, temporarily locate the sediment in the openings of the endless open belt and drag the sediment towards the first rim 213 where it can be extracted using the gutter. The crops will be scooped and taken by the endless open belt upwards beyond the first rim 213. The openings in the endless open belt may be small enough to prevent the root-crops to pass the openings.

The container, preferably along the surface 215 opposite to first flat surface 211 via which the sunken objects are extracted, may comprise air or liquid blowers 240 under the liquid level. This to circulate liquid and to assist floating products to be driven to the liquid surface or even to the side where the first extraction unit is present. Additional blowers 240 may also be present along the first flat surface 211 for the same reason.

The machine 200 shown in figure 3, can be used to separate freshly harvested potatoes from leaves, plastic and alike. To have the best result, the centre-to-centre distance WL between two adjacent bars 15 may be in the range of 150 to 250 mm. The centre-to-centre distance WT between two adjacent ropes 18 may be in the range of 10 to 25 mm. The distance D the lower side 16 of the bars 15 extend under the chains 13 and 14, may be in the range of 10 to 30 mm.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the appended claims defined in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A separating machine (200) for separating products by the difference in specific weight of the products, said machine comprising a first extraction unit (230) comprising a first open endless belt (15, 201) with openings, said machine comprising a liquid container (210) for receiving and separating products (400) on difference of specific weight, said container having a first flat surface (211) extending between the bottom (212) and a first rim (213) of the container, the inner side of the first open endless belt contacting said first flat surface along at least part of the first flat surface (211) while moving from said bottom to said first rim, wherein said first extraction unit comprises
• a first discharge means (16, 22)) at the inner side of the first open endless belt for discharging a first type of material (420) carried along with said open endless belt, which first type of material passes the openings in said first open endless belt, and **characterised by**
• a second discharge means (15, 21, 23) at the outer side of the first open endless belt for discharging a second type of material (402) carried along with said first open endless belt, which second type of material is larger than the openings in said first open endless belt.

2. A separating machine (200) according to claim 1, wherein said first open endless belt having a longitudinal and transversal direction and defining an inner and an outer side to the open endless belt, said first open endless belt comprising:
• a first and second longitudinal chain (14) or belt at the transversal outer ends of the first open endless belt;
• a plurality of transversal bars (15) having a first and a second outer end, the first outer end being connected to the first longitudinal chain or belt, the second outer end being connected to the second longitudinal chain or belt;
wherein the lower surfaces (16) of the bars are flush with or extend beyond the first and second longitudinal chain or belt at the inner side of the first open endless belt, and form part of the first discharge means.²

3. A separating machine (200) according to claim 2, wherein the lower surfaces (16) of the bars (15) extend beyond the first and second longitudinal chain or belt at the inner side of the first open endless belt.

4. A separating machine (200) according to any one of the preceding claims 2 to 3, wherein said bars (15) are rods (21) provided at their lower side with a protrusion (22), said protrusion extending beyond the first and second longitudinal chain or belt at the inner side of the first open endless belt.

5. A separating machine (200) according to any one of the preceding claims 2 to 4, wherein said bars (15) are rods (21) provided at their upper side with a protrusion (23), said protrusion extending beyond the first and second longitudinal chain or belt at the outer side of the first open endless belt and forming part of the second discharge means.

6. A separating machine according to any one of the preceding claims 2 to 5, wherein the open endless belt further comprises one or more intermediate longitudinal belts or chains, provided at a transversal positions between the two outer belts or chains.

7. A separating machine according to any one of the preceding claims 2 to 6, wherein the open endless belt comprises a first and second longitudinal belt.

8. A separating machine according to claim 7, wherein the open endless belt comprises one or more intermediate longitudinal belts.

9. A separating machine according to any one of the preceding claims 7 to 8, wherein the belts are drive belts.

10. A separating machine according to any one of the preceding claims 7 to 9, wherein the distance between adjacent belts is in the range of 500 to 800mm.

11. A separating machine according to any one of the preceding claims 2 to 10, wherein the distance between adjacent bars, centre to centre, is in the range of 10 to 300 mm. 3

12. A separating machine (200) according to any one of the preceding claims, wherein the machine further comprises a second extraction unit (220) for unit for extracting floating objects (401) from the liquid surface.

13. A separating machine according to claim 12, wherein said second extraction unit comprises a second endless belt (221), said second endless belt being an open endless belt or a closed endless belt.

14. A separating machine according to claim 13, wherein said second endless belt comprises protrusions (222) at the outer side of the second endless belt.

15. The use of the separating machine (200) according to any one of the claims 1 to 14 for separating foreign materials from harvested root crops, such as potatoes.

## Patentansprüche

1. Trennmaschine (200) zum Trennen von Produkten durch die Differenz des spezifischen Gewichts der Produkte, wobei die Maschine eine erste Extraktionseinheit (230) umfasst, die ein erstes offenes Endlosband (15, 201) mit Öffnungen umfasst, wobei die Maschine einen Flüssigkeitsbehälter (210) zum Aufnehmen und Trennen von Produkten (400) bei Differenz des spezifischen Gewichts umfasst, wobei der Behälter eine erste flache Oberfläche (211) aufweist, die sich zwischen dem Boden (212) und einem ersten Rand (213) des Behälters erstreckt, wobei die Innenseite des ersten offenen Endlosbands die erste flache Oberfläche entlang zumindest eines Teils der ersten flachen Oberfläche (211) berührt, während sie sich von dem Boden zu dem ersten Rand bewegt, wobei die erste Extraktionseinheit Folgendes umfasst
• ein erstes Abgabemittel (16, 22) an der Innenseite des ersten offenen Endlosbands zum Abgeben einer ersten Art von Material (420), das mit dem offenen Endlosband mitgeführt wird, welche erste Art von Material die Öffnungen in dem ersten offenen Endlosband passiert, und **gekennzeichnet ist durch**
• ein zweites Abgabemittel (15, 21, 23) an der Außenseite des ersten offenen Endlosbands zum Abgeben einer zweiten Art von Material (402), das mit dem ersten offenen Endlosband mitgeführt wird, welche zweite Art von Material größer als die Öffnungen in dem ersten offenen Endlosband ist.

2. Trennmaschine (200) gemäß Anspruch 1, wobei das erste offene Endlosband eine Längs- und Querrichtung aufweist und eine Innen- und eine Außenseite für das offene Endlosband definiert, wobei das erste offene Endlosband Folgendes umfasst:
• ein/e erste/s und zweites Längskette (14) oder -band an den transversalen äußeren Enden des ersten offenen Endlosbands;
• eine Vielzahl von transversalen Stäben (15) mit einem ersten und einem zweiten äußeren Ende, wobei das erste äußere Ende mit der/m ersten Längskette oder -band verbunden ist, wobei das zweite äußere Ende mit der/m zweiten Längskette oder -band verbunden ist;
wobei die unteren Oberflächen (16) der Stäbe bündig mit der/m ersten und zweiten Längskette oder -band an der Innenseite des ersten offenen Endlosbands sind oder sich darüber hinaus erstrecken und einen Teil des ersten Abgabemittels bilden.

3. Trennmaschine (200) gemäß Anspruch 2, wobei sich die unteren Oberflächen (16) der Stäbe (15) über die/das erste und zweite Längskette oder -band an der Innenseite des ersten offenen Endlosbands hinaus erstrecken.

4. Trennmaschine (200) gemäß einem der vorhergehenden Ansprüche 2 bis 3, wobei die Stäbe (15) Stangen (21) sind, die an ihrer Unterseite mit einem Vorsprung (22) bereitgestellt sind, wobei sich der Vorsprung über die/das erste und zweite Längskette oder -band an der Innenseite des ersten offenen Endlosbands hinaus erstreckt.

5. Trennmaschine (200) gemäß einem der vorhergehenden Ansprüche 2 bis 4, wobei die Stäbe (15) Stangen (21) sind, die an ihrer Oberseite mit einem Vorsprung (23) bereitgestellt sind, wobei sich der Vorsprung über die/das erste und zweite Längskette oder -band an der Außenseite des ersten offenen Endlosbands hinaus erstreckt und einen Teil des zweiten Abgabemittels bildet.

6. Trennmaschine gemäß einem der vorhergehenden Ansprüche 2 bis 5, wobei das offene Endlosband ferner ein oder mehrere Zwischenlängsbänder oder -ketten umfasst, die an einer Querposition zwischen den zwei äußeren Bändern oder Ketten bereitgestellt sind.

7. Trennmaschine gemäß einem der vorhergehenden Ansprüche 2 bis 6, wobei das offene Endlosband ein erstes und zweites Längsband umfasst.

8. Trennmaschine gemäß Anspruch 7, wobei das offene Endlosband ein oder mehrere Zwischenlängsbänder umfasst.

9. Trennmaschine gemäß einem der vorhergehenden Ansprüche 7 bis 8, wobei die Bänder Antriebsbänder sind.

10. Trennmaschine gemäß einem der vorhergehenden Ansprüche 7 bis 9, wobei der Abstand zwischen benachbarten Bändern in dem Bereich von 500 bis 800 mm liegt.

11. Trennmaschine gemäß einem der vorhergehenden Ansprüche 2 bis 10, wobei der Abstand zwischen benachbarten Stäben von Mitte zu Mitte in dem Bereich von 10 bis 300 mm liegt.

12. Trennmaschine (200) gemäß einem der vorhergehenden Ansprüche, wobei die Maschine ferner eine zweite Extraktionseinheit (220) für eine Einheit zum Extrahieren schwimmender Objekte (401) von der Flüssigkeitsoberfläche umfasst.

13. Trennmaschine gemäß Anspruch 12, wobei die zweite Extraktionseinheit ein zweites Endlosband (221) umfasst, wobei das zweite Endlosband ein offenes Endlosband oder ein geschlossenes Endlosband ist.

14. Trennmaschine gemäß Anspruch 13, wobei das zweite Endlosband Vorsprünge (222) an der Außenseite des zweiten Endlosbands umfasst.

15. Verwendung der Trennmaschine (200) gemäß einem der Ansprüche 1 bis 14 zum Trennen von Fremdmaterialieren aus geernteten Hackfrüchten, wie etwa Kartoffeln.

## Revendications

1. Machine de séparation (200) destinée à séparer des produits par la différence de poids spécifique des produits, ladite machine comprenant une première unité d'extraction (230) comprenant une première bande sans fin ouverte (15, 201) avec des ouvertures, ladite machine comprenant un récipient de liquide (210) destiné à recevoir et séparer des produits (400) sur la différence de poids spécifique, ledit récipient comportant une première surface plane (211) s'étendant entre le fond (212) et un premier rebord (213) du récipient, la face interne de la première bande sans fin ouverte étant en contact avec ladite première surface plane le long d'au moins une partie de la première surface plane (211) tandis qu'elle se déplace dudit fond vers ledit premier rebord,
dans laquelle ladite première unité d'extraction comprend
• un premier moyen d'évacuation (16, 22) au niveau de la face interne de la première bande sans fin ouverte destiné à évacuer un premier type de matériau (420) transporté avec ladite bande sans fin ouverte, lequel premier type de matériau passe par les ouvertures de ladite première bande sans fin ouverte et **caractérisée par**
• un second moyen d'évacuation (15, 21, 23) au niveau de la face externe de la première bande sans fin ouverte destiné à évacuer un second type de matériau (402) transporté avec ladite première bande sans fin ouverte, lequel second type de matériau est plus grand que les ouvertures de ladite première bande sans fin ouverte.

2. Machine de séparation (200) selon la revendication 1, dans laquelle ladite première bande sans fin ouverte comporte des directions longitudinale et transversale et définit des faces interne et externe par rapport à la bande sans fin ouverte, ladite première bande sans fin ouverte comprenant :
• des première et secondes chaînes (14) ou bandes longitudinales aux extrémités externes transversales de la première bande sans fin ouverte ;
• une pluralité de barres transversales (15) comportant des première et seconde extrémités externes, la première extrémité externe étant reliée à la première chaîne ou bande longitudinale, la seconde extrémité extérieure étant reliée à la seconde chaîne ou bande longitudinale ;
dans laquelle les surfaces inférieures (16) des barres affleurent ou s'étendent au-delà de la première et la seconde chaînes ou bandes longitudinales au niveau de la face interne de la première bande sans fin et forment une partie du premier moyen d'évacuation.

3. Machine de séparation (200) selon la revendication 2, dans laquelle les surfaces inférieures (16) des barres (15) s'étendent au-delà des première et seconde chaînes ou bandes longitudinales au niveau de la face interne de la première bande sans fin ouverte.

4. Machine de séparation (200) selon l'une quelconque des revendications précédentes 2 à 3, dans laquelle lesdites barres (15) sont des tiges (21) munies au niveau de leur face inférieure d'une saillie (22), ladite saillie s'étendant au-delà des première et secondes chaînes ou bandes longitudinales au niveau de la face interne de la première bande sans fin ouverte.

5. Machine de séparation (200) selon l'une quelconque des revendications précédentes 2 à 4, dans laquelle lesdites barres (15) sont des tiges (21) munies au niveau de leur face supérieure d'une saillie (23), ladite saillie s'étendant au-delà des première et seconde chaînes ou bandes longitudinales au niveau de la face externe de la première bande sans fin ouverte et faisant partie du second moyen d'évacuation.

6. Machine de séparation selon l'une quelconque des revendications précédentes 2 à 5, dans laquelle la bande sans fin ouverte comprend en outre une ou plusieurs bandes ou chaînes longitudinales intermédiaires, prévues à des positions transversales entre les deux bandes ou chaînes externes.

7. Machine de séparation selon l'une quelconque des revendications précédentes 2 à 6, dans laquelle la bande sans fin ouverte comprend des première et seconde bandes longitudinales.

8. Machine de séparation selon la revendication 7, dans laquelle la bande sans fin ouverte comprend une ou plusieurs bandes longitudinales intermédiaires.

9. Machine de séparation selon l'une quelconque des revendications précédentes 7 à 8, dans laquelle les bandes sont des bandes d'entraînement.

10. Machine de séparation selon l'une quelconque des revendications précédentes 7 à 9, dans laquelle la distance entre bandes adjacentes est comprise dans la plage de 500 à 800 mm.

11. Machine de séparation selon l'une quelconque des revendications précédentes 2 à 10, dans laquelle la distance entre barres adjacentes, de centre à centre, est comprise dans la plage de 10 à 300 mm.

12. Machine de séparation (200) selon l'une quelconque des revendications précédentes, dans laquelle la machine comprend en outre une seconde unité d'extraction (220) pour une unité destinée à extraire des objets flottants (401) de la surface du liquide.

13. Machine de séparation selon la revendication 12, dans laquelle ladite seconde unité d'extraction comprend une seconde bande sans fin (221), ladite seconde bande sans fin étant une bande sans fin ouverte ou une bande sans fin fermée.

14. Machine de séparation selon la revendication 13, dans laquelle ladite seconde bande sans fin comprend des saillies (222) au niveau de la face externe de la seconde bande sans fin.

15. Utilisation de la machine de séparation (200) selon l'une quelconque des revendications 1 à 14 pour séparer des corps étrangers de légumes-racines récoltés, tels que des pommes de terre.
